# EUROPEAN PATENT SPECIFICATION

(11) **EP 3 277 045 B1**
(45) Date of publication and mention of the grant of the patent: **31.07.2019**
(21) Application number: 16771318.9
(22) Date of filing: 24.03.2016
(51) Int. Cl.: H04W 74/08

(54) **METHOD AND DEVICE FOR PREEMPTING TRANSMISSION RESOURCES ON UNLICENSED CARRIERS**
VERFAHREN UND VORRICHTUNGEN ZUR BEANSPRUCHUNG VON ÜBERTRAGUNGSRESSOURCEN BEI UNLIZENZIERTEN TRÄGERN
PROCÉDÉ ET DISPOSITIF POUR PRÉEMPTER DES RESSOURCES DE TRANSMISSION SUR DES PORTEUSES SANS LICENCE

(30) Priority: 27.03.2015 CN 201510142831
(43) Date of publication of application: 31.01.2018
(73) Proprietor: China Academy of Telecommunications Technology, Hai Dian District Beijing 100191 (CN)
(72) Inventor: XU, Weijie, Beijing 100191 (CN); PAN, Xueming, Beijing 100191 (CN)
(74) Representative: Nony
(86) International application number: PCT/CN2016/077248
(87) International publication number: WO 2016/155563

(56) References cited:
- WO-A1-2014/209919
- CN-A- 1 595 821
- CN-A- 101 873 710
- CN-A- 104 038 950
- US-A1- 2014 036 853
- US-A1- 2015 023 342
- ALCATEL -LUCENT.: 'Review of Regulatory Requirements for Unlicensed Spectrum' 3GPP TSG-RAN #63 RP-140054 25 February 2014, XP050780229

## Description

This application claims the benefit of Chinese Patent Application No. 201510142831.7, filed with the Chinese Patent Office on March 27, 2015 and entitled "Method and device for preempting a transmission resource over an unlicensed carrier".

### Field

The present invention relates to the field of communications, and particularly to a method and device for preempting a transmission resource over an unlicensed carrier.

### Background

As there is a constantly growing amount of mobile data traffic, spectrum resources are increasingly insufficient, and the demand for the amount of traffic may have failed to be satisfied by deploying a network, and transmitting the traffic, only over licensed spectrum resources, so transmission may also be transmitted over unlicensed spectrum resources in a Long Term Evolution (LTE) system, where this LTE system can be referred to as Unlicensed LTE (or simply U-LTE or LTE-U), to thereby improve the experience of a user, and extend a coverage area. However there has been absent so far a definite solution the LTE system operating over an unlicensed spectrum resource.

A principle of Listen Before Talk (LBT) over an unlicensed spectrum resource will be introduced as follows.

There is no particular application system planned over any unlicensed spectrum resource, so the unlicensed spectrum resources can be shared by various wireless communication systems, e.g., Bluetooth, WIFI, etc., where the systems access the shared unlicensed spectrum resources by preempting the resources. Accordingly the coexistence between LTE-U systems deployed by different operators, and between an LTE-U system and a WIFI or another wireless communication system has been studied as a focus. As specified by the 3GPP, an LTE-U system and a WIFI or another wireless communication system shall coexist in a fair mode, where an unlicensed frequency band operates as a secondary carrier with the assistance of a primary carrier in a licensed frequency band. The LBT has been widely approved in the industry as a general access contention mode in the LTE-U system.

Essentially in the LBT technology, an 802.11 system operates in the Carrier Sense Multiple Access / Collision Avoidance (CSMA/CA) mechanism, and the WIFI system preempts a resource over an unlicensed frequency spectrum as follows: firstly the WIFI system listens to a channel, and when the time during which the channel is clear arrives a Distributed inter-Frame Space (DIFS), it determines that the current channel is a clear channel, and then respective stations waiting for an access to the channel enter a random fallback stage, so that the stations can be avoided from colliding over the same resource. Moreover for the sake of fairness, none of the stations can occupy any frequency spectrum resource for a long period of time, but shall release the resource after some period of time elapses, or an upper limit of the amount of transmitted data is reached, so that the resource can be preempted by another WIFI or LTE system.

If the LTE system operates over a carrier in an unlicensed frequency band, then an LTE base station and a terminal will also contend for a resource in the LBT mechanism to thereby share the frequency spectrum resource with another device or system in a faire mode.

Two modes of LBT in an unlicensed frequency spectrum in the European standard will be introduced as follows.

Two modes of LBT in the 5GHz unlicensed frequency band specified in the European ESTI are the frame based equipment mode and the load based equipment mode.

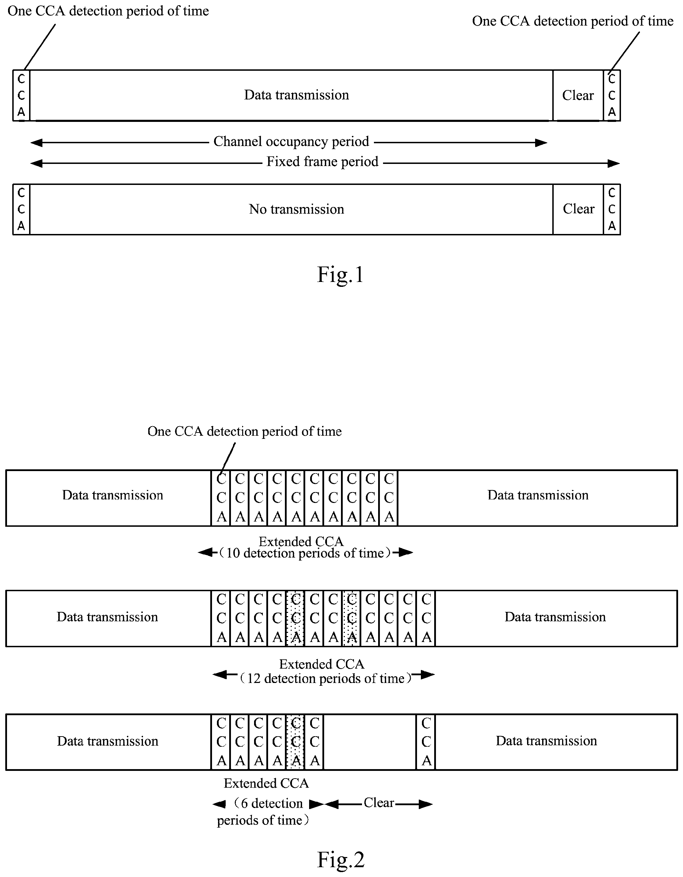

Referring to Fig.1, there is a fixed length of time occupied by a frame in the frame based equipment mode, where the fixed length of time includes a signal transmission length of time, and an idle period of time which is no less than 5% of the signal transmission length of time. The fixed frame is followed by a Clear Channel Assessment (CCA) detection period of time (at least 20µs) in which whether a channel is a clear channel is detected. Unlicensed equipment can access a channel only if it determines that the channel is clear, through energy detection in the CCA detection period of time. For example, the equipment measures power of a signal received over the channel in the CCA period of time, and if the measured power of the received signal over the channel is above a first power threshold, then it will determine that the channel is busy; otherwise, it will determine that the channel is clear.

Referring to Fig.2, the signal transmission length of time is varying in the load based equipment mode. Before the equipment transmits a signal over an unlicensed channel, the equipment needs to perform CCA detection on a channel once through energy detection. If it is determined that the channel is clear, then the equipment may transmit a signal over the channel; otherwise, where it is determined that the channel is busy, the unlicensed equipment needs to detect the channel in the extended CCA mode, where the equipment needs to determine that the channel is clear, and can access the channel, only after detecting N CCA periods of time in which the channel is clear in the extended CCA detection. The value of N is a value generated randomly between 1 and q, where q ranges from 4 to 32.

There has been absent so far a definite solution to the LTE system operating over an unlicensed frequency spectrum, and there has been absent so far a definite solution to LTE base stations or terminals, served by the same operator, contending for a resource over an unlicensed carrier. A possibility thereof is an application of the frame based equipment or the load based equipment mode above. However both of these two modes have their obvious disadvantages, for example, there is only one CCA window occasion (20µs) for detecting a channel before the preset maximum length of time allowed for the equipment to transmit a signal over the channel in the frame based equipment mode, whereas for the maximum length of time, for example, the largest transmission length of time after the equipment preempts a channel over an unlicensed carrier is 100ms in the existing European specification; and moreover the largest transmission length of time is 4ms in the existing Japanese specification.

If there is another equipment transmitting a signal over the unlicensed carrier exactly in the CCA window occasion, then the current equipment may fail to contend for the channel, but will have to wait for the next CCA window to contend for the channel again. Accordingly, there is a limited capacity of accesses to the channel in the unlicensed frequency band in the frame based equipment mode. In the load based equipment mode, the CCA detection position of each equipment is determined separately, and the value N of the CCA period of time for which the channel is clear as required is generated separately and randomly.

Accordingly, even if a number of equipments are served by the same operator, then only a part of the equipments contending with each other may access a channel. The LTE system may be significantly advantageous in a frequency reuse factor of 1 for a number of cells to be deployed into a network, where signals can be transmitted in a number of adjacent cells in the same frequency band.

In summary, there has been absent in the prior art a reasonable solution to contending for a channel resource by an LTE system operating over an unlicensed carrier.

US 2014/036853 A1 patent application relates to a method for transmitting signals over an unlicensed band phase of a base station in a wireless communication system, which comprises the steps of: transmitting a physical down-link control channel (PDCCH) from a licensed band; and transmitting a physical down-link shared channel (PDSCH) over a time interval of the unlicensed band corresponding to the sub-frame transmitted by the PDCCH, where a reservation signal can be transmitted to a pre-set point from the point the unlicensed band is available to the base station, if the base station performs wave transmission sensing for the unlicensed band for transmission of the PDSCH, and the pre-set point is earlier than the point at which the unlicensed becomes available from the transmission sensing results.

### Summary

Embodiments of the invention provide a method and device for preempting a transmission resource over an unlicensed carrier so as to enable a better technical solution of contending for a channel resource over an unlicensed carrier, thus resulting in a higher utilization ratio of a frequency spectrum.

In a possible implementation, a value of N is signaled by a master equipment to the plurality of equipments.

A transceiver is configured to be controlled by the processor to transmit and receive a signal.

An embodiment of the invention provides a method for controlling preemption of a transmission resource over an unlicensed carrier, the method including:
determining, by a base station, an extended Clear Channel Assessment (CCA) parameter N; and
signaling, by the base station, the extended CCA parameter N to a user equipment to instruct the user equipment to access a channel to transmit a signal, when the following condition is satisfied: the user equipment detects the channel being clear throughout N CCA detection periods of time in any one CCA detection window.

In a possible implementation, the base station signals the extended CCA parameter to the user equipment over a Physical Downlink Control Channel (PDCCH).

In a possible implementation, the base station signals the extended CCA parameter N to a number of user equipments.

An embodiment of the invention provides a method for preempting a transmission resource over an unlicensed carrier, the method including:
receiving, by a user equipment, an extended CCA parameter N transmitted by a base station; and
determining, by the user equipment, that the user equipment can access a channel and transmit a signal, when the following condition is satisfied: the user equipment detects the channel being clear throughout N CCA detection periods of time in any one CCA detection window.

In a possible implementation, the user equipment receives the extended CCA parameter N transmitted by the base station over a Physical Downlink Control Channel (PDCCH).

An embodiment of the invention provides a base station including:
a determining unit configured to determine an extended Clear Channel Assessment (CCA) parameter N; and
a signaling unit configured to signal the extended CCA parameter N to a user equipment to instruct the user equipment to access a channel to transmit a signal, when the following condition is satisfied: the user equipment detects the channel being clear throughout N CCA detection periods of time in any one CCA detection window.

In a possible implementation, the signaling unit signals the extended CCA parameter to the user equipment over a Physical Downlink Control Channel (PDCCH).

In a possible implementation, the signaling unit signals the extended CCA parameter N to a number of user equipments.

An embodiment of the invention provides a user equipment including:
a receiving unit configured to receive an extended CCA parameter N transmitted by a base station; and
a preempting unit configured to determine that the user equipment can access a channel and transmit a signal, when the following condition is satisfied: the user equipment detects the channel being clear throughout N CCA detection periods of time in any one CCA detection window.

In a possible implementation, the receiving unit receives the extended CCA parameter N transmitted by the base station over a Physical Downlink Control Channel (PDCCH).

An embodiment of the invention provides a base station including:
a processor configured to read program in a memory:
to determine an extended Clear Channel Assessment (CCA) parameter N; and
to signal the extended CCA parameter N to a user equipment through a transceiver to instruct the user equipment to access a channel to transmit a signal, when the following condition is satisfied: the user equipment detects the channel being clear throughout N CCA detection periods of time in any one CCA detection window.

Preferably the processor signals the extended CCA parameter to the user equipment over a Physical Downlink Control Channel (PDCCH) through the transceiver.

Preferably the processor signals the extended CCA parameter N to a number of user equipments through the transceiver.

An embodiment of the invention provides a user equipment including:
a processor configured to read program in a memory to perform:
receiving an extended CCA parameter N transmitted by a base station, through a transceiver; and
determining that the user equipment can access a channel and transmit a signal, when the following condition is satisfied: the user equipment detects the channel being clear throughout N CCA detection periods of time in any one CCA detection window.

Preferably the processor receives the extended CCA parameter N transmitted by the base station over a Physical Downlink Control Channel (PDCCH) through the transceiver.

### Brief Description of the Drawings

Fig.1 is a schematic diagram of the LBT solution in the frame based equipment mode in the prior art;
Fig.2 is a schematic diagram of the LBT solution in the load based equipment mode in the prior art;
Fig.3 is a schematic flow chart of a method for preempting a transmission resource over an unlicensed carrier according to an embodiment of the invention;
Fig.4 is a schematic diagram of intervals of time occupied for CCA detection and signal transmission according to an embodiment of the invention;
Fig.5 is another schematic diagram of intervals of time occupied for CCA detection and signal transmission according to an embodiment of the invention;
Fig.6 is a schematic flow chart of a method for controlling preemption of a transmission resource over an unlicensed carrier according to an embodiment of the invention;
Fig.7 is a schematic flow chart of a method for preempting a transmission resource over an unlicensed carrier according to an embodiment of the invention;
Fig.8 is a schematic structural diagram of a device for preempting a transmission resource over an unlicensed carrier according to an embodiment of the invention;
Fig.9 is a schematic structural diagram of another device for preempting a transmission resource over an unlicensed carrier according to an embodiment of the invention;
Fig.10 is a schematic structural diagram of a base station according to an embodiment of the invention;
Fig.11 is a schematic structural diagram of a user equipment according to an embodiment of the invention;
Fig.12 is a schematic structural diagram of another base station according to an embodiment of the invention; and
Fig.13 is a schematic structural diagram of another user equipment according to an embodiment of the invention.

### Detailed Description of the Embodiments

Embodiments of the invention provide a method and device for preempting a transmission resource over an unlicensed carrier so as to enable a better technical solution of contending for a channel resource over an unlicensed carrier, thus resulting in a higher utilization ratio of a frequency spectrum.

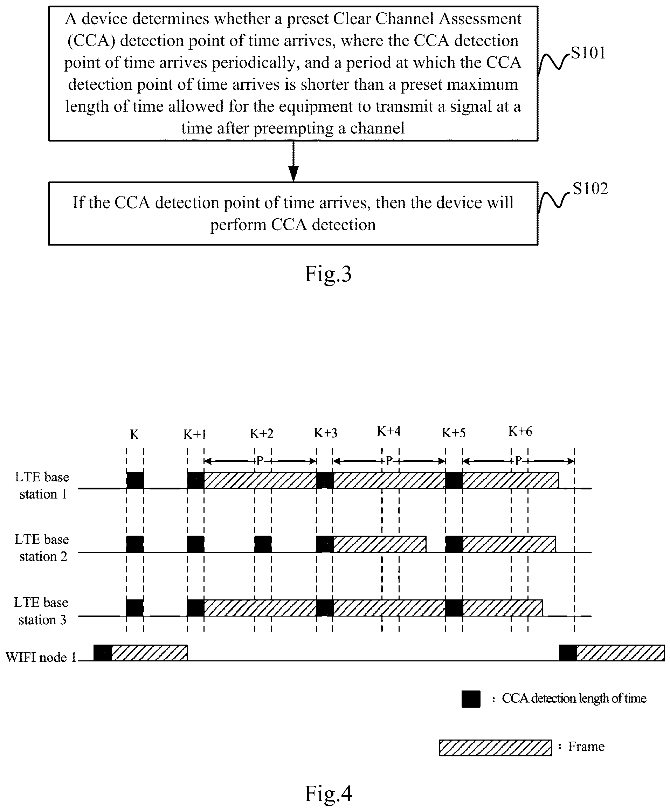

Referring to Fig.3, a method for preempting a transmission resource over an unlicensed carrier according to an embodiment of the invention includes the following operations.

S101: A device determines whether a preset CCA detection point of time arrives, where the CCA detection point of time arrives periodically, and the period at which the CCA detection point of time arrives is shorter than a preset maximum length of time allowed in a specification for the equipment to transmit a signal at a time on a channel.

Here the CCA detection point of time arrives periodically, that is, there is the same length of time of an interval between start points of time or end points of time of every two adjacent CCA detection operations.

For example, the unlicensed device performs CCA detection on the channel at a time period M, and the preset maximum length of time allowed in the specification for the device to transmit a signal at a time on the channel is P, so M<P.

S102: If the CCA detection point of time arrives, then the device will perform the CCA detection.

It shall be noted that in the embodiment of the invention, the device can be a base station device at the network-side, or can be a User Equipment (UE) at the terminal-side.

With this method, the device can perform CCA detection periodically, and the period at which the CCA detection point of time arrives is shorter than the preset maximum length of time allowed in a specification for the equipment to transmit a signal at a time on the channel, so as compared with the frame based equipment mode in the prior art, the period of CCA detection can be shortened to thereby provide more channel access occasions while maintaining the frequency reuse factor to be 1 where a number of equipments can perform CCA detection concurrently in the frame based equipment mode so as to improve the utilization efficiency of the frequency spectrum over the unlicensed frequency band; and as compared with the extended CCA mode in the prior art, the time period of the window for CCA detection can be fixed to thereby facilitate the frequency reuse factor to be 1 where a number of base stations can successfully detect the channel concurrently so as to also improve the utilization efficiency of the frequency spectrum.

Preferably if the CCA detection point of time arrives, then the device will perform CCA detection particularly as follows.

If the CCA detection point of time arrives, then the device will determine whether there is a signal being transmitted currently, and if so, then the device will abort the current CCA detection, and further wait for a next CCA detection point of time to arrive; otherwise, the device will perform the current CCA detection.

Stated otherwise, if the device is transmitting a signal, then if the CCA detection point of time arrives, then the device will skip it instead of performing CCA detection, and further wait for a next CCA detection point of time to arrive, and will not further perform CCA detection until the next CCA detection point of time arrives but there is no signal being transmitted.

Preferably the length of time occupied for each CCA detection is a preset length of time, or a length of time corresponding to any number of CCA detection timeslots, where the number of CCA detection timeslots is a positive integer and falls into a preset range.

Stated otherwise, the CCA detection can be CCA detection in a fixed length of time, or can be extended CCA detection.

Preferably the CCA detection point of time is a start point of time or an end point of time of CCA detection.

Preferably after the device performs the CCA detection, the method further includes: if the CCA detection succeeds, then a signal will be transmitted over the channel with the successful CCA detection, where the length of time occupied for transmitting the signal is no longer than the maximum length of time, or the end point of time of the signal being transmitted is no later than the first CCA detection point of time occurring after the maximum length of time elapses from the current CCA detection point of time.

For example, if the current CCA detection point of time is an instance of time 0, then if the current CCA detection succeeds, then a signal will be transmitted, where the signal is being transmitted for the longest period of time no longer than P, or the end point of time of the signal being transmitted is no later than the first CCA detection point of time occurring after P elapses from the instance of time 0.

Here the CCA detection succeeds, for example, where it is detected that the channel remains clear throughout N timeslots in the CCA detection window.

Preferably the device performs CCA detection as follows.

If the device detects N timeslots in which the channel is clear, then it will be determined that the CCA detection succeeds, where N is a positive integer, and shared by a plurality of equipments. For example, the same extended CCA parameter is applicable to LTE base stations served by the same operator, that is, the value of N is the same.

Preferably the value of N is signaled by a master equipment to the plurality of equipments.

The master equipment can be a master LTE base station among a number of base stations, or can be a centralized control node at a higher layer than the base stations; and if the master equipment is one of the base stations, then the plurality of equipments which are equipments under control may be a base station or a UE.

Two particular embodiments will be exemplified as follows.

In a first embodiment, the solution is applicable in the frame based equipment mode.

As illustrated in Fig.4, LTE devices perform CCA detection with a fixed length of time (e.g., 20µs) periodically (e.g., at a period of 1ms or 2ms). There is a signal to be transmitted between an LTE Base Station (BS) 1 and an LTE BS3 in the K-th CCA detection window, so the LTE devices perform CCA detection, but since a WIFI node 1 is transmitting a signal, both the LTE BS1 and the LTE BS3 detect a busy channel in the K-th CCA detection window, that is, the CCA detection fails. The WIFI node 1 finishes its signal transmission in the (K+1)-th CCA detection window, so both the LTE BS1 and the LTE BS3 detects the clear channel in the (K+1)-th CCA detection window, that is, the CCA detection succeeds. Both the LTE BS1 and the LTE BS3 start to transmit a signal as required in the specification on an unlicensed device (the longest transmission length of time P may be 10ms (in the existing European specification) or 4ms (in the existing Japanese specification)). No CCA detection will be performed in the allowed longest transmission length of time P, for example, the LTE BS1 and the LTE BS3 will not perform CCA detection in the (K+2)-th CCA detection window. A base station LTE BS2 has a signal to be transmitted in the (K+2)-th CCA detection window, but a result of CCA detection in the (K+2)-th CCA detection window shows "Busy" because the base station devices LTE BS1 and LTE BS3 proximate thereto are transmitting signals, but the longest transmission length of time of a previous transmission occasion of the LTE BS1 and the LTE BS3 expires in the (K+3)-th CCA detection window, so CCA detection needs to performed again, at this time, all of the three base stations LTE BS1, LTE BS2, and LTE BS3 successfully determine that the channel is clear, as a result of the CCA detection, so that the next transmission occasion is enabled.

As can be apparent from the process above, the period of CCA detection is shortened (M<P), so as compared with the frame based equipment mode in the prior art, more channel access occasions can be provided while maintaining the frequency reuse factor to be 1 where a number of equipments can perform CCA detection concurrently in the frame based equipment mode so as to improve the utilization efficiency of the frequency spectrum over the unlicensed frequency band in this method.

In a second embodiment, the solution is applicable to an access with contention in the extended CCA mode.

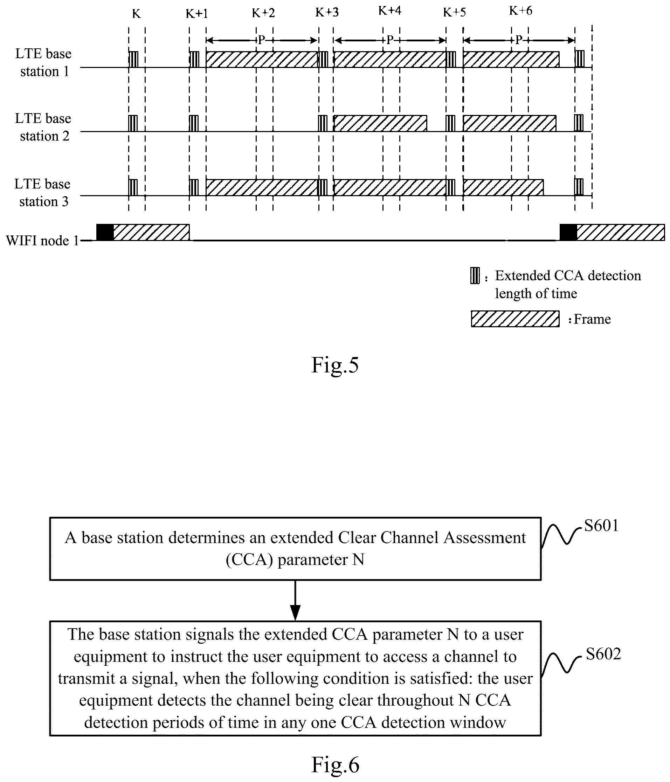

The method according to the embodiment of the invention can also be applicable to an access in the extended CCA mode, and as illustrated in Fig.5, it is different from the first embodiment in that the length of time occupied for each CCA detection in the periodical CCA detection according to the first embodiment is a fixed detection length of time, e.g., 20µs; and in the extended CCA mode according to this embodiment, the LTE base station starts CCA detection at a periodically arriving CCA detection point of time. Referring to Fig.2, for example, when the start point of time of the CCA detection window arrives, the unlicensed device to detect a channel in the extended CCA mode will determine that the channel is clear, and can access the channel, only upon detecting the channel being clear throughout N CCA detection periods of time in the CCA detection window. N is a value generated randomly between 1 and q, where q ranges from 4 to 32.

As for the extended CCA detection, a start point of each CCA detection is defined according to this embodiment, that is, the start point of time of each CCA detection occurs periodically, and the end point of time of each CCA detection is determined by a particular channel condition, and the number N of idle timeslots in CCA detection generated randomly by the device, so the end point of each CCA detection will not be defined according to this embodiment, but the end point falls into the CCA detection window. After each successful CCA detection, one transmission mode is that the device transmits for the largest transmission length of time P as required in the specification (the largest transmission length of time may be 10ms (in the existing European specification) or 4ms (in the existing Japanese specification)), another transmission mode is that transmits up to the start point of the first CCA detection window occurring after the largest transmission length of time P elapses from the start point of the current CCA detection window.

Furthermore in order to enable a number of LTE base stations served by the same operator to transmit a signal synchronously instead of only a part of the base stations transmits a signal due to signal interference between them, preferably the same extended CCA parameter is applicable to the LTE base stations. For example, the start point of time of the CCA detection window is defined according to the embodiment of the invention, and if the same number N of idle timeslots in CCA detection may be applicable to the base stations, then typically a number of adjacent base stations may obtain the same result of CCA detection, that is, they may succeed in CCA detection concurrently, so that the base stations will initiate signal transmission concurrently to thereby avoid signal interference between them. The same parameter N is applicable to the base stations, for example, the parameter N can be generated randomly by a master base station, and then distributed to the base stations via a network interface.

With the method according to this embodiment, the base station performs CCA detection in a window with a fixed time period to thereby maintain the frequency reuse factor to be 1 where a number of LTE base stations can successfully detect the channel concurrently so as to improve the utilization efficiency of the frequency spectrum.

Furthermore it shall be noted that the technical solution according to the embodiments of the invention have been described in both the first and second embodiments above by way of an example in which the base station operates as the CCA detection device, but essentially the technical solution according to the embodiments of the invention can also be applicable to a terminal device operating over an unlicensed carrier. Especially if the technical solution according to the embodiments of the invention operates in the extended CCA mode, then the same extended CCA parameter N may be applicable to a number of terminal devices, for example, the extended CCA parameter can be generated by a base station, and then signaled to the terminal devices. For example, the extended CCA parameter can be signaled to the terminal devices over a Physical Downlink Control Channel (PDCCH) in uplink scheduling.

Accordingly referring to Fig.6, a method for controlling preemption of a transmission resource over an unlicensed carrier at the base station side according to an embodiment of the invention includes the following operations.
S601: A base station determines an extended Clear Channel Assessment (CCA) parameter N;
S602: The base station signals the extended CCA parameter N to a user equipment to instruct the user equipment to access a channel to transmit a signal, when the following condition is satisfied: the user equipment detects the channel being clear throughout N CCA detection periods of time in any one CCA detection window.

With this method, the base station signals the extended CCA parameter N to the user equipment to instruct the user equipment to access the channel to transmit a signal, when the following condition is satisfied: the user equipment detects the channel being clear throughout N CCA detection periods of time in any one CCA detection window. As compared with the frame based equipment mode in the prior art, the period of CCA detection can be shortened to thereby provide more channel access occasions so as to improve the utilization efficiency of the frequency spectrum in the unlicensed frequency band.

Preferably the base station signals the extended CCA parameter to the user equipment over a Physical Downlink Control Channel (PDCCH).

Preferably the base station signals the extended CCA parameter N to a number of user equipments, so that the same extended CCA parameter N is common to the user equipments to thereby enable the user equipments served by the same operator to transmit a signal synchronously instead of only a part thereof transmitts a signal due to mutual signal interference, so as to further improve the utilization efficiency of the frequency spectrum in the unlicensed frequency band.

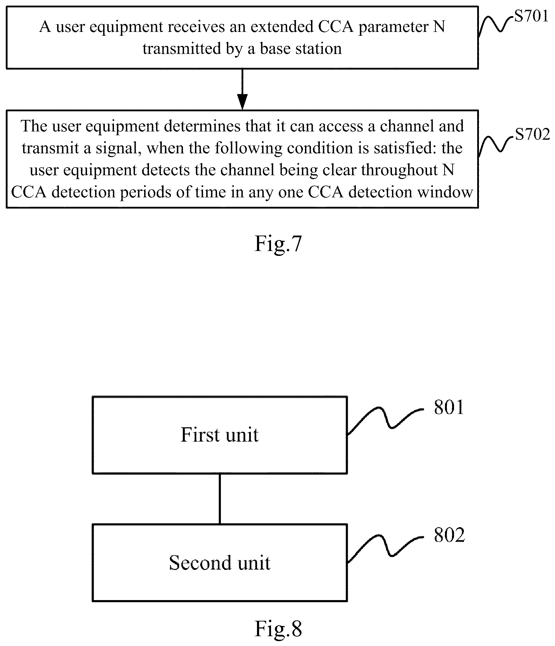

Accordingly referring to Fig.7, a method for preempting a transmission resource over an unlicensed carrier at the user equipment side according to an embodiment of the invention includes the following operations.
S701: A user equipment receives an extended CCA parameter N transmitted by a base station;
S702: The user equipment determines that it can access a channel to transmit a signal, when the following condition is satisfied: the user equipment detects the channel being clear throughout N CCA detection periods of time in any one CCA detection window.

Preferably the user equipment receives the extended CCA parameter N transmitted by the base station over a Physical Downlink Control Channel (PDCCH).

In correspondence to the method above, referring to Fig.8, a device for preempting a transmission resource over an unlicensed carrier according to an embodiment of the invention includes: a first unit 801 is configured to determine whether a CCA detection point of time preset by the device arrives, where the CCA detection point of time arrives periodically, and a period at which the CCA detection point of time arrives is shorter than the preset maximum length of time allowed for the device to transmit a signal at a time after preempting a channel; and a second unit 802 is configured, if the CCA detection point of time arrives, to perform CCA detection.

Preferably the second unit is particularly configured: if the CCA detection point of time arrives, to determine whether there is a signal being transmitted currently, and if so, to abort the current CCA detection, and to further wait for a next CCA detection point of time to arrive; otherwise, to perform the current CCA detection.

Preferably the length of time occupied for each CCA detection is a preset length of time, or a length of time corresponding to any number of CCA detection timeslots, where the number of CCA detection timeslots is a positive integer and falls into a preset range.

Preferably the CCA detection point of time is a start point of time or an end point of time of CCA detection.

Preferably after the CCA detection is performed, the second unit is further configured: if the CCA detection succeeds, to transmit a signal over the channel with the successful CCA detection, where the length of time occupied for transmitting the signal is no longer than the maximum length of time, or the end point of time of the signal being transmitted is no later than the first CCA detection point of time occurring after the maximum length of time elapses from the current CCA detection point of time.

Preferably the second unit is particularly configured: if N timeslots in which the channel is clear are detected, to determine that the CCA detection succeeds, where N is a positive integer, and shared by a number of equipments.

Preferably the value of N is signaled by master equipment to the equipments.

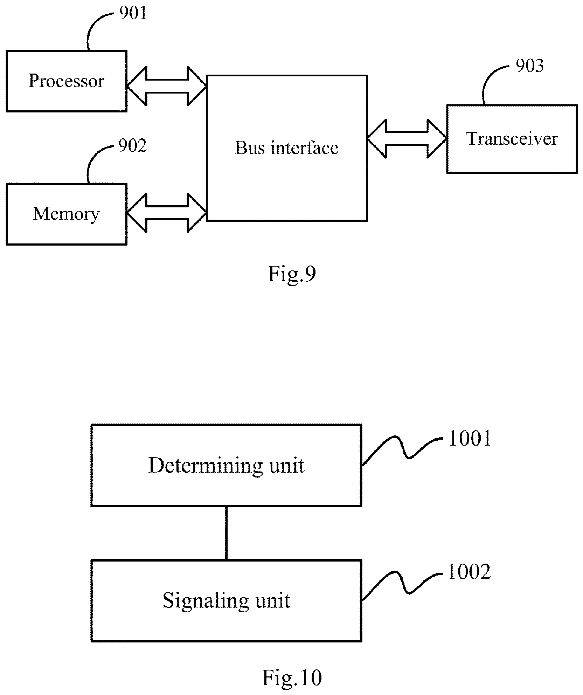

Referring to Fig.9, another device for preempting a transmission resource over an unlicensed carrier according to an embodiment of the invention includes: a processor 901 configured to read program in a memory 902 to perform: determining whether a CCA detection point of time preset by the device arrives, where the CCA detection point of time arrives periodically, and a period at which the CCA detection point of time arrives is shorter than the preset maximum length of time allowed for the device to transmit a signal at a time after preempting a channel; and if the CCA detection point of time arrives, performing CCA detection.

Preferably the processor 901 is configured: if the CCA detection point of time arrives, to determine whether there is a signal being transmitted currently, and if so, to abort the current CCA detection, and to further wait for a next CCA detection point of time to arrive; otherwise, to perform the current CCA detection.

Preferably the length of time occupied for each CCA detection is a preset length of time, or a length of time corresponding to any number of CCA detection timeslots, where the number of CCA detection timeslots is a positive integer and falls into a preset range.

Preferably the CCA detection point of time is a start point of time or an end point of time of CCA detection.

Preferably after the CCA detection is performed, the processor 901 is further configured: if the CCA detection succeeds, to transmit a signal over the channel with the successful CCA detection, where the length of time occupied for transmitting the signal is no longer than the maximum length of time, or the end point of time of the signal being transmitted is no later than the first CCA detection point of time occurring after the maximum length of time elapses from the current CCA detection point of time.

Preferably the processor 901 configured to perform the CCA detection is configured: if N timeslots in which the channel is clear are detected, to determine that the CCA detection succeeds, where N is a positive integer, and shared by a number of equipments.

Preferably the value of N is signaled by master equipment to the equipments.

A transceiver 903 is configured to be controlled by the processor 901 to transmit and receive a signal.

Here in Fig.9, the bus architecture can include any number of interconnecting buses and bridges to particularly link together various circuits including one or more processors represented by the processor 901, and one or more memories represented by the memory 902. The bus architecture can further link together various other circuits, e.g., peripheral devices, manostats, power management circuits, etc., all of which are well known in the art, so a further description thereof will be omitted in this context. The bus interface serves as an interface between the bus and the transceiver. The transceiver 903 can be a number of elements including a transmitter and a receiver which are units for communication with various other devices over a transmission medium. The processor 901 is responsible for managing the bus architecture and performing normal processes, and the memory 902 can store data for use by the processor 901 in performing the operations.

Referring to Fig.10, a base station according to an embodiment of the invention includes: a determining unit 1001 is configured to determine an extended Clear Channel Assessment (CCA) parameter N; and a signaling unit 1002 is configured to signal the extended CCA parameter N to a user equipment to instruct the user equipment to access a channel to transmit a signal, when the following condition is satisfied: the user equipment detects the channel being clear throughout N CCA detection periods of time in any one CCA detection window.

Preferably the signaling unit signals the extended CCA parameter to the user equipment over a Physical Downlink Control Channel (PDCCH).

Preferably the signaling unit signals the extended CCA parameter N to a number of user equipments.

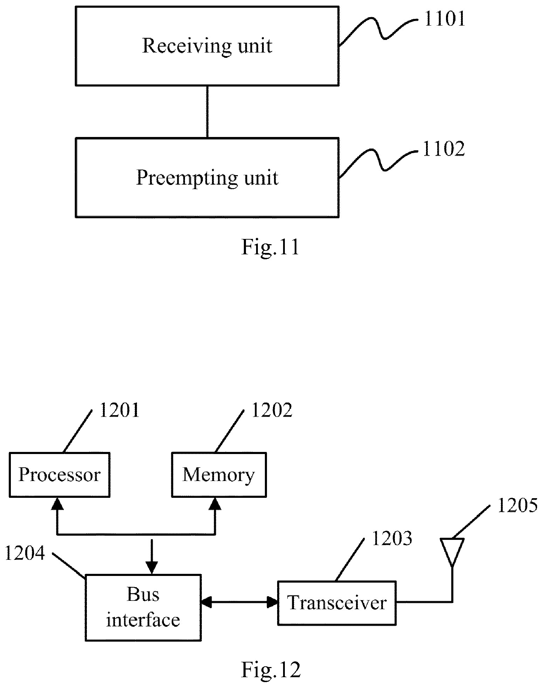

Referring to Fig.11, a user equipment according to an embodiment of the invention includes: a receiving unit 1101 configured to receive an extended CCA parameter N transmitted by a base station; and a preempting unit 1102 configured to determine that the user equipment can access a channel to transmit a signal, when the following condition is satisfied: the user equipment detects the channel being clear throughout N CCA detection periods of time in any one CCA detection window.

Preferably the receiving unit receives the extended CCA parameter N transmitted by the base station over a Physical Downlink Control Channel (PDCCH).

Referring to Fig.12, another base station according to an embodiment of the invention includes: a processor 1201 configured to read program in a memory 1202 to perform: determining an extended Clear Channel Assessment (CCA) parameter N; and signaling the extended CCA parameter N to a user equipment through a transceiver 1203 to instruct the user equipment to access a channel to transmit a signal, when the following condition is satisfied: the user equipment detects the channel being clear throughout N CCA detection periods of time in any one CCA detection window.

The transceiver 1203 is configured to be controlled by the processor 1201 to transmit and receive data.

Preferably the processor 1201 signals the extended CCA parameter to the user equipment over a Physical Downlink Control Channel (PDCCH) through the transceiver 1203.

Preferably the processor 1201 signals the extended CCA parameter N to a number of user equipments through the transceiver 1203.

In Fig.12, the processor, the memory, and the transceiver are connected over a bus which can include any number of interconnecting buses and bridges to particularly link together various circuits including one or more processors represented by the processor 1201, and one or more memories represented by the memory 1202. The bus can further link together various other circuits, e.g., peripheral devices, manostats, power management circuits, etc., all of which are well known in the art, so a further description thereof will be omitted in this context. The bus interface 1204 serves as an interface between the bus and the transceiver. The transceiver can be an element, or a number of elements including a number of transmitters and receivers which are units for communication with various other devices over a transmission medium. The processor 1201 is responsible for managing the bus and performing normal processes, and can further provide various functions including timing, peripheral interfaces, voltage adjustment, power management, and other control functions. The memory can store data for use by the processor in performing the operations. The data processed by the processor are transmitted over a wireless medium through the antenna 1205, and furthermore the antenna further receives and transmits data to the processor.

The processor is responsible for managing the bus and performing normal processes, and can further provide various functions including timing, peripheral interfaces, voltage adjustment, power management, and other control functions. The memory can store data for use by the processor in performing the operations.

Optionally the processor can be a Central Processing Unit (CPU), an Application Specific Integrated Circuit (ASIC), a Field Programmable Gate Array (FPGA), or a Complex Programmable Logic Device (CPLD).

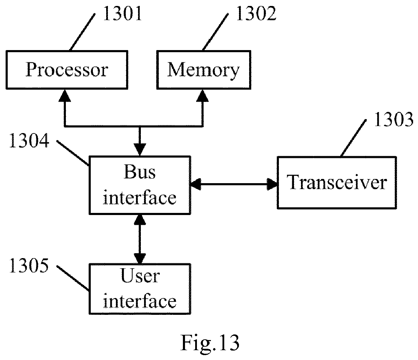

Referring to Fig.13, another user equipment according to an embodiment of the invention includes: a processor 1301 is configured to read program in a memory 1302 to perform: receiving an extended CCA parameter N transmitted by a base station, through a transceiver 1303; and determining that the user equipment can access a channel to transmit a signal, when the following condition is satisfied: the user equipment detects the channel being clear throughout N CCA detection periods of time in any one CCA detection window.

Preferably the processor 1301 receives the extended CCA parameter N transmitted by the base station over a Physical Downlink Control Channel (PDCCH) through the transceiver 1303.

The transceiver 1303 is configured to be controlled by the processor 1301 to transmit and receive a signal.

In Fig.13, the processor, the memory, and the transceiver are connected over a bus which can include any number of interconnecting buses and bridges to particularly link together various circuits including one or more processors represented by the processor 1301, and one or more memories represented by the memory 1302. The bus can further link together various other circuits, e.g., peripheral devices, manostats, power management circuits, etc., all of which are well known in the art, so a further description thereof will be omitted in this context. The bus interface 1304 serves as an interface between the bus and the transceiver. The transceiver can be an element, or a number of elements including a number of transmitters and receivers which are units for communication with various other devices over a transmission medium. For example, the transceiver receives external data from another device. The transceiver is configured to transmit the data processed by the processor to the other device. Dependent upon the nature of the computing system, a user interface 1305, e.g., a keypad, a display, a speaker, a microphone, a joystick, etc., can be further provided. The processor is responsible for managing the bus and performing normal processes, and can further provide various functions including timing, peripheral interfaces, voltage adjustment, power management, and other control functions. The memory can store data for use by the processor in performing the operations.

Optionally the processor can be a CPU, an ASIC, an FPGA, or a CPLD.

In summary, the embodiments of the invention provide a solution of contending for a resource by an LTE equipment operating in an unlicensed frequency band in the LBT mode. With the technical solution according to the embodiments of the invention, as compared with the frame based equipment mode in the prior art, the period of CCA detection can be shortened to thereby provide more channel access occasions while maintaining the frequency reuse factor to be 1 where a number of equipments can perform CCA detection concurrently in the frame based equipment mode so as to improve the utilization efficiency of the frequency spectrum over the unlicensed frequency band in this method; and in the extended CCA mode, the base station can perform CCA detection in the window with the time period which is fixed, to thereby facilitate the frequency reuse factor to be 1 where a number of LTE base stations can successfully detect the channel concurrently so as to improve the utilization efficiency of the frequency spectrum, and consequently the operating efficiency of the system.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination. Furthermore the invention can be embodied in the form of a computer program product embodied in one or more computer useable storage mediums (including but not limited to a disk memory, a CD-ROM, an optical memory, etc.) in which computer useable program codes are contained.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

Evidently those skilled in the art can make various modifications and variations to the invention without departing from the scope of the invention. Thus the invention is also intended to encompass these modifications and variations thereto so long as the modifications and variations come into the scope of the claims appended to the invention.

## Claims

1. A method for controlling preemption of a transmission resource over an unlicensed carrier comprising:
Determining (S601), by a base station, an extended Clear Channel Assessment, CCA, parameter N; and
Signaling (S602), by the base station, the extended CCA parameter N to a user equipment to instruct the user equipment to access a channel to transmit a signal when a following condition is satisfied: the user equipment detects the channel being clear throughout N CCA detection periods of time in any one CCA detection window.

2. The method according to claim 1, wherein the base station signals the extended CCA parameter to the user equipment over a Physical Downlink Control Channel, PDCCH.

3. The method according to claim 1 or 2, wherein the base station signals the extended CCA parameter N to a plurality of user equipments.

4. A method for preempting a transmission resource over an unlicensed carrier comprising:
Receiving (S701), by a user equipment, an extended Clear Channel Assessment, CCA, parameter N transmitted by a base station; and
Determining (S702), by the user equipment, that the user equipment can access a channel to transmit a signal, when a following condition is satisfied: the user equipment detects the channel being clear throughout N CCA detection periods of time in any one CCA detection window.

5. The method according to claim 4, wherein the user equipment receives the extended CCA parameter N transmitted by the base station over a Physical Downlink Control Channel, PDCCH.

6. A base station comprising:
a determining unit (1001) configured to determine an extended Clear Channel Assessment, CCA, parameter N; and
a signaling unit (1002) configured to signal the extended CCA parameter N to a user equipment to instruct the user equipment to access a channel to transmit a signal, when a following condition is satisfied: the user equipment detects the channel being clear throughout N CCA detection periods of time in any one CCA detection window.

7. The base station according to claim 6, wherein the signaling unit (1002) signals the extended CCA parameter to the user equipment over a Physical Downlink Control Channel, PDCCH.

8. The base station according to claim 6 or 7, wherein the signaling unit (1002) signals the extended CCA parameter N to a plurality of user equipments.

9. A user equipment comprising:
a receiving unit (1101) configured to receive an extended Clear Channel Assessment, CCA, parameter N transmitted by a base station; and
a preempting unit (1102) configured to determine that the user equipment can access a channel to transmit a signal, when a following condition is satisfied: the user equipment detects the channel being clear throughout N CCA detection periods of time in any one CCA detection window.

10. The user equipment according to claim 9, wherein the receiving unit (1101) receives the extended CCA parameter N transmitted by the base station over a Physical Downlink Control Channel, PDCCH.

## Patentansprüche

1. Verfahren zur Steuerung der Vorherbestimmung einer Übertragungsressource über einen nicht lizenzierten Träger, umfassend:
Bestimmung (S601) eines erweiterten "Clear Channel Assessment"-, CCA, Parameters N durch eine Basisstation; und
Signalisierung (S602) des erweiterten CCA-Parameters N durch die Basisstation an eine Benutzerausrüstung, um auf einen Kanal zuzugreifen, um ein Signal zu übertragen, wenn eine folgende Bedingung erfüllt ist: die Benutzerausrüstung erkennt während N-CCA-Erkennungszeiträumen in einem CCA-Erkennungsfenster, dass der Kanal frei ist.

2. Verfahren nach Anspruch 1, wobei die Basisstation den erweiterten CCA-Parameter über einen physischen Downlinksteuerkanal, PDCCH, an die Benutzerausrüstung signalisiert.

3. Verfahren nach Anspruch 1 oder 2, wobei die Basisstation den erweiterten CCA-Parameter N an mehrere Benutzerausrüstungen signalisiert.

4. Verfahren zum Vorherbestimmen einer Übertragungsressource über einen nicht lizenzierten Träger, umfassend:
Empfang (S701) eines erweiterten "Clear Channel Assessment"-, CCA, Parameters N, der durch eine Basisstation gesendet wurde, durch eine Benutzerausrüstung; und
Bestimmung (S702) durch die Benutzerausrüstung, dass die Benutzerausrüstung auf einen Kanal zugreifen kann, um ein Signal zu übertragen, wenn eine folgende Bedingung erfüllt ist: die Benutzerausrüstung erkennt während N-CCA-Erkennungszeiträumen in einem CCA-Erkennungsfenster, dass der Kanal frei ist.

5. Verfahren nach Anspruch 4, wobei die Benutzerausrüstung den erweiterten CCA-Parameter N empfängt, der durch die Basisstation über einen physischen Downlinksteuerkanal, PDCCH, gesendet wird.

6. Basisstation, umfassend:
eine Bestimmungseinheit (1001), konfiguriert zum Bestimmen eines erweiterten "Clear Channel Assessment"-, CCA, Parameters N; und
eine Signalisierungseinheit (1002), konfiguriert zum Signalisieren des erweiterten CCA-Parameters N durch die Basisstation an eine Benutzerausrüstung, um auf einen Kanal zuzugreifen, um ein Signal zu übertragen, wenn eine folgende Bedingung erfüllt ist: die Benutzerausrüstung erkennt während N-CCA-Erkennungszeiträumen in einem CCA-Erkennungsfenster, dass der Kanal frei ist.

7. Basisstation nach Anspruch 6, wobei die Signalisierungseinheit (1002) den erweiterten CCA-Parameter über einen physischen Downlinksteuerkanal, PDCCH, an die Benutzerausrüstung signalisiert.

8. Basisstation nach Anspruch 6 oder 7, wobei die Signalisierungseinheit (1002) den erweiterten CCA-Parameter N an mehrere Benutzerausrüstungen signalisiert.

9. Benutzerausrüstung, umfassend:
eine Empfangseinheit (1101), konfiguriert zum Empfangen eines erweiterten "Clear Channel Assessment"-, CCA, Parameters N, der durch eine Basisstation übermittelt wird; und
eine Vorherbestimmungseinheit (1102), konfiguriert zum Bestimmen, dass die Benutzerausrüstung auf einen Kanal zugreifen kann, um ein Signal zu übertragen, wenn eine folgende Bedingung erfüllt ist: die Benutzerausrüstung erkennt während N-CCA-Erkennungszeiträumen in einem CCA-Erkennungsfenster, dass der Kanal frei ist.

10. Benutzerausrüstung nach Anspruch 9, wobei die Empfangseinheit (1101) den erweiterten CCA-Parameter N empfängt, der durch die Basisstation über einen physischen Downlinksteuerkanal, PDCCH, gesendet wird.

## Revendications

1. Procédé de contrôle de la préemption d'une ressource de transmission sur un opérateur sans licence comprenant les étapes consistant à :
déterminer (S601), par une station de base, un paramètre N d'évaluation d'un canal libre, CCA (Clear Channel Assessment), étendue ; et
signaler (S602), par la station de base, le paramètre N de la CCA étendue à un équipement d'utilisateur pour demander à l'équipement d'utilisateur d'accéder à un canal afin de transmettre un signal lorsqu'une condition suivante est satisfaite : l'équipement d'utilisateur détecte que le canal est libre pendant N périodes de détection de la CCA dans une quelconque fenêtre de détection de la CCA.

2. Procédé selon la revendication 1, dans lequel la station de base signale le paramètre de la CCA étendue à l'équipement d'utilisateur sur un canal de commande physique de la liaison descendante, PDCCH (Physical Downlink Control Channel).

3. Procédé selon la revendication 1 ou 2, dans lequel la station de base signale le paramètre N de la CCA étendue à une pluralité d'équipements d'utilisateur.

4. Procédé de préemption d'une ressource de transmission sur un opérateur sans licence comprenant les étapes consistant à :
recevoir (S701), par un équipement d'utilisateur, un paramètre N d'évaluation d'un canal libre étendue, CCA, transmis par une station de base ; et
déterminer (S702), par l'équipement d'utilisateur, que l'équipement d'utilisateur peut accéder à un canal pour transmettre un signal, lorsqu'une condition suivante est satisfaite : l'équipement d'utilisateur détecte que le canal est libre pendant N périodes de détection de la CCA dans une quelconque fenêtre de détection de la CCA.

5. Procédé selon la revendication 4, dans lequel l'équipement d'utilisateur reçoit le paramètre N de la CCA étendue transmis par la station de base sur un canal de commande physique de la liaison descendante, PDCCH.

6. Station de base comprenant :
une unité de détermination (1001), configurée pour déterminer un paramètre N d'évaluation d'un canal libre, CCA, étendue ; et
une unité de signalisation (1002), configurée pour signaler le paramètre N de la CCA étendue à un équipement d'utilisateur pour demander à l'équipement d'utilisateur d'accéder à un canal afin de transmettre un signal lorsqu'une condition suivante est satisfaite : l'équipement d'utilisateur détecte que le canal est libre pendant N périodes de détection de la CCA dans une quelconque fenêtre de détection de la CCA.

7. Station de base selon la revendication 6, dans laquelle l'unité de signalisation (1002) signale le paramètre de la CCA étendue à l'équipement d'utilisateur sur un canal de commande physique de la liaison descendante, PDCCH.

8. Station de base selon la revendication 6 ou 7, dans laquelle l'unité de signalisation (1002) signale le paramètre N de la CCA étendue à une pluralité d'équipements d'utilisateur.

9. Équipement d'utilisateur comprenant :
une unité de réception (1101) configurée pour recevoir un paramètre N d'évaluation de canal libre, CCA, étendue transmis par une station de base ; et
une unité de préemption (1102), configurée pour déterminer que l'équipement d'utilisateur peut accéder à un canal pour transmettre un signal, lorsqu'une condition suivante est satisfaite : l'équipement d'utilisateur détecte que le canal est libre pendant N périodes de détection de la CCA dans une quelconque fenêtre de détection de la CCA.

10. Équipement d'utilisateur selon la revendication 9, dans lequel l'unité de réception (1101) reçoit le paramètre N de la CCA étendue transmis par la station de base sur un canal de commande physique de la liaison descendante, PDCCH.
